# EUROPEAN PATENT SPECIFICATION

(11) **EP 3 463 629 B1**
(45) Date of publication and mention of the grant of the patent: **20.10.2021**
(21) Application number: 17727678.9
(22) Date of filing: 25.05.2017
(51) Int. Cl.: B01D 53/86, B01D 53/94, B01J 29/76, B01J 23/42

(54) **METHOD AND SYSTEM FOR TREATING NOX IN EXHAUST GAS FROM STATIONARY EMISSION SOURCES**
VERFAHREN UND SYSTEM ZUR BEHANDLUNG VON NOX IN ABGASEN AUS STATIONÄREN EMISSIONSQUELLEN
PROCÉDÉ ET SYSTÈME D'ÉCHAPPEMENT POUR TRAITER DES NOX DANS UN GAZ D'ÉCHAPPEMENT PROVENANT DE SOURCES D'ÉMISSION FIXES

(30) Priority: 31.05.2016 US 201662343183 P
(43) Date of publication of application: 10.04.2019
(73) Proprietor: Johnson Matthey Public Limited Company, London EC4A 4AB (GB)
(72) Inventor: ANDERSEN, Paul Joseph, Audubon, Pennsylvania 19403-2305 (US); DOURA, Kevin, Audubon, Pennsylvania 19403-2305 (US)
(74) Representative: Wilson, Nicola Ann
(86) International application number: PCT/GB2017/051487
(87) International publication number: WO 2017/207969

(56) References cited:
- WO-A2-2008/132452
- WO-A2-2010/075345
- DE-A1-102012 007 890
- DE-A1-102015 104 348
- KR-A- 20150 052 335
- US-A- 4 572 110
- US-B1- 8 568 674

## Description

The present invention relates to a method of selectively catalysing the reduction of oxides of nitrogen (NOₓ) including nitrogen monoxide in an exhaust gas of a stationary source of NOₓ emissions, namely a cogeneration plant, e.g. a stationary natural gas-fired engine, which exhaust gas also containing oxides of sulfur (SOₓ). The invention also relates to an exhaust system for selectively catalysing the reduction of oxides of nitrogen (NOₓ), including nitrogen monoxide, in an exhaust gas of a stationary source of NOₓ emissions, which exhaust gas also containing oxides of sulfur (SOₓ). The exhaust system comprises a cogeneration plant and heat recovery steam generator (HRSG).

Emission of oxides of nitrogen from stationary sources, primarily from power stations, industrial heaters, cogeneration plants including wood-fired boilers, stationary diesel and gas engines, marine propulsion engines, diesel locomotive engines, industrial and municipal waste incinerators, chemical plants and glass, steel and cement manufacturing plants represents a major environmental problem. NOx leads to the formation of ozone in the troposphere, the production of acid rain and respiratory problems in humans. NOx is formed thermally in the combustion process by combination of the N₂ and O₂ present in the air. At temperatures greater than about 1,500 °C, this reaction proceeds at appreciable rates through a wellcharacterised mechanism called the Zeldovich equation.

In order to meet NOx emissions standards specified by various regulatory agencies, methods of after-treatment of exhaust (flue) gases are required. Among such after-treatment methods, the selective catalytic reduction (SCR) method is the best developed and most used world-wide for the control of NOₓ emissions from stationary sources due to its efficiency, selectivity (to N₂ product) and economics. The SCR reaction generally consists of the reduction of NOₓ by ammonia (NH₃) to form water and nitrogen.

The major reactions involved in SCR NOₓ reduction are shown in reactions (1), (2) and (3):

4 NO + 4 NH₃ + O₂ → 4 N₂ + 6 H₂O (1)

6 NO₂ + 8 NH₃ → 7 N₂ + 12 H₂O (2)

NO + NO₂ + 2 NH₃ → 2 N₂+ 3 H₂O (3)

When sulfur is present in the flue gas, such as in fossil fuel fired power plants, the oxidation of SO₂ to SO₃ results in the formation of H₂SO₄ (sulfuric acid) upon reaction with water (H₂O) (see reactions (4) and (5)). Where the sulfuric acid is condensed downstream, corrosion of process equipment can result.

2SO₂ + O₂ → 2SO₃ (4)

SO₃ + H₂O → H₂SO₄ (5)

The reaction of NH₃ with SO₃ also results in the formation of (NH₄)₂SO₄ and/or NH₄HSO₄ (see reactions (6) and (7)), which products can deposit on and foul SCR catalysts and downstream process equipment such as the air pre-heater (APH) downstream of a SCR catalytic reactor, or heat exchangers causing a loss in thermal efficiencies and/or increases in pressure drop:

NH₃ + SO₃ + H₂O → NH₄HSO₄ (6)

2NH₃ + SO₃ + H₂O → (NH₄)₂SO₄ (7)

Three types of catalysts that promote reactions (1)-(3) inclusive have been developed: noble metals, metal oxides and metal promoted zeolites. Noble metal SCR catalysts are primarily considered for low temperature and natural gas applications, because reaction (4) is promoted at above about 200°C.

Among the various metal oxide SCR catalysts developed for 300-400°C applications, vanadia supported on titania in the anatase form and promoted with tungsta or molybdena was found to resist sulfation and to have low activity for reaction (4).

Commercial zeolite SCR catalysts for the treatment of stationary source NOₓ emissions include mordenite (see R.H. Heck et al, "Catalytic Air Pollution Control - Commercial Technology", 3rd Edition (2009) John Wiley & Sons, Inc. Hoboken, New Jersey). See in particular Chapter 12.

Fe promoted zeolite catalysts have been proposed for SCR primarily for use in gas-fired cogeneration plants at high temperatures, i.e. up to 600°C, where metal oxide catalysts are thermally unstable.

The commercial SCR catalysts are deployed in the form of extruded honeycomb monoliths, plates or as coatings on inert honeycomb monoliths.

For a more complete description of the background to the application of the SCR method to stationary sources of NOₓ emission, please see P. Forzatti, App. Cat A: General 222 (2001) 221-236.

Reaction (3) is known to be a relatively fast reaction compared to either reaction (1) or in particular reaction (2), and so is preferred. In automotive applications, reaction (3) can be promoted by locating an oxidation catalyst upstream of the SCR catalyst to oxidise nitrogen monoxide to nitrogen dioxide (see US 2002/039550 A1).

However, it is also known, e.g. from SAE 2010-01-1182 that copper-promoted zeolite SCR catalysts are less sensitive to inlet NO₂/NOₓ and so copper-promoted zeolites can be used without an upstream oxidation catalyst.

Copper-zeolites are known to be severely affected by sulfur poisoning. In automotive applications it is possible to recover some (but not all) activity by using certain techniques, such as by switching to a lean exhaust gas environment and increasing the exhaust gas temperature to 650°C (see SAE 2008-01-2023). However, it is not possible to practice such techniques in SCR systems for stationary source NOₓ emission control. This is because the volume and space velocity of exhaust gas in the system are significant and the volume of the SCR catalyst used in the system is also significant and so it would be uneconomic to attempt to increase the temperature of all the exhaust gas entering to temperatures >650°C from a typical running temperature of about 300°C and for a period to desulphate the SCR catalyst to the extent necessary.

Exhaust gases from stationary sources of NOₓ can vary in SOₓ content. The SOₓ content of stationary source exhaust gases can vary widely although in some examples the content is relatively low. So, for example, the SOₓ content in exhaust gases from combusted natural gas can be as low as 0.5 ppm SO₂. However, where the lifetime of the SCR catalyst is 5 years or 40,000 hours and it is not practically possible to desulphate the SCR catalyst, even low amounts of SOₓ may contribute significantly to a decline in SCR catalyst activity over the catalyst's lifetime. In practice, this means that copper zeolite catalysts may be impractical for treating NOₓ in exhaust gases of stationary sources of NOₓ when the exhaust gases also contains oxides of sulfur (SOₓ).

Therefore, there exists a problem in the application of highly active copper-zeolite SCR catalyst technology to the art of treating NOₓ in exhaust gas of stationary sources of emission also containing SOₓ in that once sulphated, the SCR catalyst loses catalytic activity but it is not practically or economically possible to desulphate it.

DE10 2012 007890A1 relates to an exhaust gas cleaning system for cleaning exhaust gas flows from diesel engines.

WO2008/132452A2 relates to a method of converting nitrogen oxides in a gas, such as an exhaust gas of a vehicular lean-burn internal combustion engine.

US4572110A relates to cogeneration systems, a heat recovery steam boiler system and an emission control system.

The inventors have now found, very surprisingly, that when the NO₂/NOₓ ratio in an exhaust gas from a stationary source of NOₓ also containing SOx at an inlet to a copper-promoted zeolite SCR catalyst is controlled to approximately 1, the NOₓ conversion activity of the catalyst is sustained to a relatively greater extent than if the NO₂/NOₓ ratio were uncontrolled. This discovery makes the use of copper-promoted zeolite SCR catalysts for treating NOₓ emissions in exhaust gases from stationary sources also containing SOₓ more practical.

According to a first aspect, the invention provides a method of selectively catalysing the reduction of oxides of nitrogen (NOₓ) including nitrogen monoxide in an exhaust gas of a stationary source of NOₓ emissions, which exhaust gas also containing oxides of sulfur (SOₓ), wherein the stationary source of NOₓ emissions is a cogeneration plant comprising a heat recovery steam generator, which method comprising the steps of passively oxidising nitrogen monoxide to nitrogen dioxide over an oxidation catalyst comprising a platinum group metal so that a NO₂/NOₓ content is from 40-60%; introducing a nitrogenous reductant into the exhaust gas; and contacting exhaust gas having the 40-60% NO₂/NOₓ content and containing the nitrogenous reductant with a selective catalytic reduction (SCR) catalyst comprising an aluminosilicate zeolite promoted with copper, wherein the platinum group metal in the oxidation catalyst is platinum supported on a particulate support and is disposed on a substrate at 0.0353-1.41 g/L (1-40 g/ft3) and wherein the support for the platinum group metal is silica-doped alumina, titania or optionally doped zirconia.

The SOₓ content of the exhaust gas is dependent on the gas mixture emitted by the stationary source of NOₓ, e.g. power plant etc. So, for example, an exhaust gas from a waste incinerator may reach 10 ppm SO₂ but an exhaust gas from a natural gas-fired engine can be as low as 0.50 ppm SO₂. The method according to the invention is capable of treating exhaust gas containing from about 0.50 ppm to about 20 ppm. However, the oxidation catalyst activity can become poisoned by the sulphur through extended use. Therefore, preferably, the oxidation catalyst is adapted to resist sulphur poisoning, as described in greater detail hereinbelow.

Unlike automotive applications, where the act of driving creates dynamic changes in the temperature of the exhaust gas entering the SCR catalyst, the exhaust gas temperatures in a stationary source application are relatively constant for extended periods of use, tens of thousands of hours. Also the temperatures to which automotive SCR catalysts are exposed can vary widely, through dynamic driving but also system processes such as filter regeneration. The relatively constant temperatures to which stationary source SCR catalysts are exposed can be relatively low by comparison with automotive applications. For example, the temperature at which the exhaust gas contacts the SCR catalyst can be about 250°C to about 400°C.

The step of oxidising nitrogen monoxide to nitrogen dioxide using the oxidation catalyst can be an upstream process step from the step of selectively catalysing the reduction NOₓ on the SCR catalyst. Accordingly, the temperature at which the exhaust gas contacts the oxidation catalyst is generally higher, e.g. about 275°C to about 425°C.

The nitrogenous reductant entering the SCR catalyst is ammonia (NH₃), but the ammonia can be injected into the exhaust gas either as ammonia as such or as a precursor of ammonia, such as urea, or ammonia can be evolved from a solid source e.g. by heating ammonium carbamate. It is important that the mixing of ammonia and the exhaust gas is done as completely as possible before the exhaust gas/ammonia enters the SCR catalyst. This can be done using various baffles and static mixers having e.g. herringbone ad skew channel shapes, as necessary provided that they do not significantly contribute to an increase in backpressure. Good mixing of ammonia and exhaust gas can be promoted by a thorough two dimensional coverage of reducing agent injection across a duct carrying the exhaust gas. Such arrangements are known in the art as ammonia injection grids (AIG).

In order to promote reaction (3) (and reactions (1) and (2) in addition), the alpha ratio of ammonia molecules to NOₓ molecules used in the reaction is preferably about 0.90 to about 1.10.

Although various ways of making copper-promoted aluminosilicate zeolites are known, including impregnation, incipient wetness (or capillary) impregnation and electrostatic adsorption, preferably the copper is ion exchanged in the aluminosilicate zeolite and the quantity of "free", i.e. un-ion exchanged copper is minimised. This is because we have found that un-ion exchanged copper can promote unselective oxidation of NH₃ (4NH₃ + 5O₂ → 4NO + 6H₂O), which reduces net NOx reduction.

In view of the extended period of the desired life cycle of SCR catalysts for use in stationary source NOₓ treatment, it is preferable that the catalysts are as active as possible, as durable as possible and as resistant to poisons as possible phosphorus and zinc and alkali metals. More active catalysts can use the nitrogenous reductant more efficiently and/or enable lower SCR catalyst volume to be used.

Aluminosilicate zeolites that are particularly durable to hydrothermal ageing and hydrocarbon "coking" have a maximum ring size of eight tetrahedral atoms and are referred to in the art as "small pore" zeolites. Zeolites are categorised by the International Zeolite Association by their Framework Types. Preferred aluminosilicate zeolites according to the invention have a Framework Type Code that is CHA, AEI or AFX.

However, in certain applications where durability over an extended period is not a primary requirement, e.g. in relatively low temperature applications, "medium pore" zeolites, such as those having the Framework Type Codes MFI or FER or "large pore" zeolites, e.g. BEA or MOR, may be equally applicable.

A silica-to-alumina ratio (SAR) of the zeolite can be any appropriate SAR for promoting the reactions (1), (2) and (3). Generally, this is a balance between thermal stability on the one hand, wherein a relatively high silica content is preferred, and the promoting effect of an ion-exchanged transition metal, wherein a relatively high alumina content is preferred. In practice, the SAR selected may be dependent on the framework type code of the zeolite, but is typically within the range of about 10 to about 256, with SAR of about 15 to about 40 preferred for small pore zeolites such as CHA, AEI and AFX.

The SCR catalyst can be in the form of a washcoat that is coated onto a substrate, such as an inert ceramic honeycomb monolith, e.g. made from cordierite, or a metal monolith or it can be prepared as an extruded honeycomb body, wherein the catalyst is mixed with a paste of binder (or matrix) components and then extruded into the desired shape having flow channels extending therethrough. Washcoat compositions containing the zeolites for use in the present invention for coating onto the monolith substrate or manufacturing extruded type substrate monoliths can comprise a binder selected from the group consisting of alumina, silica, (nonzeolite) silica-alumina, naturally occurring clays, TiO₂, ZrO₂, and SnO₂.

The oxidation catalyst for use in the system according to the present invention comprises a platinum group metal, which is platinum supported on a particulate support. The platinum/support is then disposed on a substrate, such as an inert honeycomb monolith, in order to achieve the desired oxidation of NO to NO₂ thereby to promote the so-called "fast reaction, i.e. reaction (3), at 0.0353-1.41 g/L (1-40 g/ft3).

Since the exhaust gas comprises SOₓ, the oxidation catalyst activity can become poisoned as SO₂ chemisorbs onto the platinum active sites at temperatures below 300°C, resulting in an inhibition of the CO and NO oxidation reactions. Above about 300-350°C, the SO₂ is converted to SO₃, which can react with alumina washcoat components forming Al₂(SO₄)₃, which can lead to deactivation by pore blockage in the alumina support. See the Heck reference mentioned hereinabove at chapter 13. In order to prevent or reduce this effect, the platinum group metal component is supported on silica-doped alumina, titania or zirconia, which are acidic particulate support components. The silica-doped alumina can comprise up to 40wt% silica, e.g. 1.5 - 40 wt% silica.

The method according to the first aspect of the invention is used to treat exhaust gas from a stationary source of NOₓ emission also containing SOₓ. The exhaust gas is a product of a cogeneration power plant.

The cogeneration plant is preferably a stationary natural gas-fired engine.

There is described herein an exhaust system for selectively catalysing the reduction of oxides of nitrogen (NOₓ) including nitrogen monoxide in an exhaust gas of a stationary source of NOₓ emissions, which exhaust gas also containing oxides of sulfur (SOₓ), optionally for use in the method described above, which system comprising an oxidation catalyst comprising a platinum group metal for passively oxidising nitrogen monoxide to nitrogen dioxide so that a NO₂/NOₓ content is from 40-60%; an injector for introducing a nitrogenous reductant into the exhaust gas located downstream from the oxidation catalyst; and a selective catalytic reduction (SCR) catalyst comprising an aluminosilicate zeolite promoted with copper located downstream of the injector.

The composition of the SCR catalyst and the oxidation catalyst can be the same as that disclosed hereinabove in connection with the method according to the first aspect of the invention.

Preferably, the exhaust system described herein comprises a heat recovery steam generator (HRSG).

According to a second aspect, the invention provides a stationary source of NOₓ emissions, which is a cogeneration power plant comprising a heat recovery steam generator (HRSG), comprising an exhaust system, which exhaust gas also containing oxides of sulfur (SOₓ), optionally for use in a method described above, which system comprises an oxidation catalyst comprising a platinum group metal for passively oxidising nitrogen monoxide to nitrogen dioxide so that a NO₂/NOₓ content is from 40-60%; an injector for introducing a nitrogenous reductant into the exhaust gas located downstream from the oxidation catalyst; and a selective catalytic reduction (SCR) catalyst comprising an aluminosilicate zeolite promoted with copper located downstream of the injector, wherein the platinum group metal in the oxidation catalyst is platinum supported on a particulate support and is disposed on a substrate at 0.0353-1.41 g/L (1-40 g/ft3) and wherein the support for the platinum group metal is silica-doped alumina, titania or optionally doped zirconia.

The cogeneration plant is preferably a stationary natural gas-fired engine.

In order that the invention may be more fully understood, the following Examples are provided by way of illustration only. The SCR catalyst of Example 1 is in accordance with the present invention. In Example 2, the oxidation catalyst comprising Pt supported on alumina (Table 6) is a comparative example i.e. not in accordance with the present invention. The oxidation catalyst comprising Pt supported on silica doped alumina (Table 7 and last row of Table 10), the oxidation catalyst comprising Pt supported on titania (Table 8) and the oxidation catalyst comprising Pt supported on doped zirconia (Table 9) are in accordance with the present invention.

### EXAMPLE 1 ― Cu/CHA SCR Catalyst Activity in Reactions (1), (2) and (3)

A commercially available aluminosilicate CHA zeolite was ion-exchanged with 3wt% copper according to the methods disclosed in WO 2008/132452, i.e. the CHA was NH₄⁺ ion exchanged in a solution of NH₄NO₃, then filtered. The resulting materials were added to an aqueous solution of Cu(NO₃)₂ with stirring. The slurry was filtered, then washed and dried. The procedure can be repeated to achieve a desired metal loading. The final product was calcined. The resulting product was washcoated on a 300 cells per square inch (cpsi) (46.5 cells cm⁻²) cordierite honeycomb substrate monolith having cell walls of 5 mil (thousandths of an inch (0.127mm)) and the coated substrate was calcined in air at 500°C for 2 hours to obtain a sample referred to herein as "fresh" - as opposed to "aged" - catalyst. Prior to testing, the calcined, coated substrate was aged in air/water (steam) at 450°C for 48 hours. A 1.5 inch x 3.5 inch core was removed from the aged substrate. The sensitivity of the catalyst's activity for reactions (1), (2) and (3) was tested using a laboratory reactor and a base gas mixture for all tests of 15%O₂, 8% H₂O, 3%CO₂, 50ppm CO, and balanced by N₂ at a space velocity of 120,000 hr⁻¹ and a total inlet NOx concentration of 30 ppm (30 ppm NO only for reaction (1), 30 ppm NO₂ for reaction (2); and 15 ppm NO and 15 ppm NO₂ for reaction (3)). Ammonia was introduced to the base gas mixture for all SCR reactions. The ammonia:NOₓ ratio (ANR) for all SCR reactions was 1, i.e. 30 ppm NH₃ was used. Following an initial assessment of SCR activity, the catalyst was aged in sulphur dioxide by switching off the ammonia and adding 20ppm SO₂ to the base gas mixture at a constant 300°C and at a flow rate of 100 standard litres gas per minute (slpm) for 60 minutes. For reaction (1), the ageing cycle in SO₂ was repeated.

The results of the testing of reaction (1) are shown in Table 2

**Table 2**

| **% NOx Conversion /Temperature** | **SCR catalyst Inlet Temperature (°C)** | | | |
|---|---|---|---|---|
| | **200** | **250** | **300** | **350** |
| **Fresh catalyst** | 55% | 87% | 93% | 95% |
| **Sulphated run** #1 | 21% | 54% | 80% | 93% |
| **Sulphated run** #2 | 22% | 64% | 84% | 92% |

The results in Table 2 show high fresh NO conversion for reaction (1), significantly reduced NO conversion following sulphation (sulphated run #1), and only slightly increased NO conversion in sulphated run #2 after multiple low sulphur tests demonstrating that the catalyst is readily poisoned by sulphur for reaction (1) and that poisoning is not easily reversed.

The results of the testing of reaction (2) are shown in Table 3

**Table 3**

| **% NOx Conversion /Temperature** | **Temperature (°C)** | | | |
|---|---|---|---|---|
| | **200** | **250** | **300** | **350** |
| **Fresh catalyst** | 21% | 43% | 80% | 92% |
| **Sulphated run #1** | 15% | 7% | 28% | 64% |

These results show that the high fresh NO₂ conversion for reaction (2) is also significantly poisoned by the sulfation treatment.

Finally, the results of the testing of reaction (3) are shown in Table 4.

**Table 4**

| **% NOx Conversion /Temperature** | **Temperature (°C)** | | | |
|---|---|---|---|---|
| | **200** | **250** | **300** | **350** |
| **Fresh catalyst** | 74% | 93% | 96% | 96% |
| **Sulphated run #1** | 65% | 92% | 96% | 97% |

These results show that the high fresh NO+NO₂ conversions for reaction (3) are maintained above 250°C even after the sulphation treatment. This result demonstrates that reaction (3) is very robust to sulphur exposure and indicates that the Cu zeolite SCR catalyst can be used to remove NOx from an exhaust stream without need for a sulphur management cycle as long as the NOx is removed via reaction C.

In this invention, it has been realized that since the rates of reactions (1) and (2) over a Cu/zeolite catalyst are significantly reduced by exposure of the catalyst to sulphur but reaction (3) is not deactivated by sulphur, a system configured to provide an approximately 50/50 ratio mix of NO/NO₂ to a Cu/zeolite SCR would take advantage of the high intrinsic activity of the Cu/zeolite SCR catalyst while not requiring the sulphur maintenance cycle typically used in mobile applications.

### EXAMPLE 2 - Oxidation Catalyst

The NO₂/NOₓ ratio in a lean combustion derived exhaust can be modified by directing that exhaust through the appropriate oxidation catalyst at the appropriate temperature and flow rate so that reaction (8) proceeds to the desired extent.

2NO + O₂ → 2 NO₂ (8)

In practice, this can be quite difficult for a mobile diesel application since the exhaust flows and temperatures continuously vary over wide ranges. However in some stationary applications, such as emission control from a combined cycle gas turbine, the system operates over narrow flow and temperature ranges making it practical to match the oxidation catalyst to the reaction conditions to get the desired NO₂/NOₓ ratio in the exhaust gas fed to a downstream SCR. For example, Table 5 shows the NO₂:NOx ratio that results from passing a gas mixture over a standard gas turbine CO oxidation catalyst at different space velocities.

The oxidation catalyst was applied as a washcoat on a 200 cells per square inch metal honeycomb substrate. The washcoat contained an alumina support material doped with 30% silica, which was impregnated with 0.6 wt% platinum. The oxidation catalyst was field aged in a turbine for about six months of constant operation in a HRSG of a gas turbine with temperature exposures of between 302°C to 354°C. The aged oxidation catalyst substrate was recovered and a 1.5 inch x 1.7 inch core was tested in a laboratory reactor using a gas mixture of 50ppm CO, 20ppm NO, 15ppm as C1 propene, i.e. the quantity of propene as a C3 molecule calculated as delivering the equivalent ppm of C1, 15%O₂, 8%H₂O, 3% CO₂, and balanced by N₂.

From the results shown in Table 5, it is apparent that the conditions can be adjusted so that the NO₂/NOₓ ratio in the outlet gas is approximately 0.5 over the 250 to 400°C temperature range which is the temperature range of interest for a combined cycle exhaust.

**Table 5**

| **% NOx Conversion/ Space Velocity (hr⁻¹ x 1000)** | **Temperature (°C)** | | | | |
|---|---|---|---|---|---|
| | 220 | 250 | 300 | 350 | 400 |
| 60 | 10% | 66% | 75% | 69% | 55% |
| 125 | 25% | 38% | 52% | 53% | 46% |
| 300 | 6% | 11% | 21% | 27% | 28% |

Table 6 and Table 7 below compare the CO oxidation activity of fresh and hydrothermally sulphur aged (HTSA) alumina supported Pt oxidation catalyst (no silica dopant) (Table 6) and an alumina-silica supported Pt catalyst (Table 7) at equivalent Pt loadings of 0.6 wt% washcoated on 1.5 inch x 2.0 inch 200 cells per square inch metal cores. The cores were aged at 300°C in air/10%H₂O/5ppm SO₂ for 336 hours. The catalysts were then evaluated for oxidation activity at 200,000 hr⁻¹ Gas Hourly Space Velocity (GHSV) in a laboratory test apparatus using a gas composition of 50ppm CO, 10ppm NH₃, 30ppm as C1 propane, 30ppm as C1 propene, 15%O₂, 8%H₂O, 3% CO₂, and N₂ balance. Chemical analysis by ICP of the Pt/Al₂O₃ sample showed that the HTSA catalyst contained 3.38 wt% sulphur and the Pt/Al₂O₃-SiO₂ catalyst contained 1.94 wt% sulphur.

**Table 6**

| **% NOx Conversion /Temperature** | **Temperature (°C)** | | | | |
|---|---|---|---|---|---|
| | **200** | **225** | **260** | **300** | **350** |
| **Pt/Al₂O₃ - Fresh** | 28% | 53% | 88% | 90% | 90% |
| **Pt/Al₂O₃** - **HTSA** | 25% | 51% | 82% | 86% | 87% |
| **% Conversion reduction from Fresh to HTSA** | -11% | -4% | -7% | -4% | -3% |

**Table 7**

| **% NOx Conversion /Temperature** | **Temperature (°C)** | | | | |
|---|---|---|---|---|---|
| | **200** | **225** | **260** | **300** | **350** |
| **Pt/Al₂O₃-SiO₂** - **Fresh** | 40% | 73% | 85% | 87% | 88% |
| **Pt/Al₂O₃-SiO₂** - **HTSA** | 23% | 73% | 86% | 88% | 89% |
| **% Conversion reduction from Fresh to HTSA** | -43% | 0% | +1% | +1% | +1% |

From the results shown in Tables 6 and 7 and the ICP analysis it can be seen that the silica-doped Pt support retains oxidation activity because it is less easily sulphated.

Tables 8 and 9 below compare CO oxidation of fresh and hydrothermal sulphur aged (HTSA) titania and doped zirconia supported 0.6 wt% Pt oxidation catalysts. The zirconia catalyst support was doped with 11%SiO₂ and 8% Y₂O₃. Both catalysts were washcoated on 200 cells per square inch 1.5 inch x 2.0 inch metal cores and were evaluated at 200,000 hr⁻¹ GHSV in a laboratory test apparatus. The HTSA conditions were 300°C in air/10%H₂O/5ppm SO₂ for 336 hrs. The gas composition for testing the oxidation catalyst activity was 50ppm CO, 10ppm NH₃, 30ppm as C1 propane, 30ppm as C1 propylene, 15%O₂, 8%H₂O, 3% CO₂, and N₂ balance.

**Table 8**

| **% NOx Conversion /Temperature** | **Temperature (°C)** | | | | |
|---|---|---|---|---|---|
| | **200** | **225** | **260** | **300** | **350** |
| **Pt/TiO₂** - **Fresh** | 56 | 70 | 85 | 86 | 87 |
| **Pt/TiO₂** - **HTSA** | 19 | 70 | 85 | 87 | 88 |
| **% Conversion reduction from Fresh to HTSA** | -66% | 0% | 0% | +1% | +1% |

**Table 9**

| **% NOx Conversion /Temperature** | **Temperature (°C)** | | | | |
|---|---|---|---|---|---|
| | **200** | **225** | **260** | **300** | **350** |
| **Pt/Zr-Si-Y - Fresh** | 67 | 78 | 87 | 88 | 89 |
| **Pt/Zr-Si-Y - HTSA** | 66 | 78 | 88 | 89 | 90 |
| **% Conversion reduction from Fresh to HTSA** | -1% | 0% | +1% | +1% | +1% |

From the results presented in Tables 8 and 9 it can be seen that both oxidation catalysts retain oxidation activity after HTSA. However, the oxidation catalyst containing doped zirconia also retains oxidation activity even at very low temperatures. This is an advantage during start-up of a gas turbine power plant when the exhaust gas composition is transient and the exhaust gas temperature is relatively low.

Table 10 below compares the CO oxidation activity of alumina- and alumina-silica 0.72 wt% supported Pt oxidation catalysts coated on 1.5 inch x 1.7 inch 200 cells per square inch metal cores. The catalysts were field aged in a gas turbine for 6 months. The oxidation catalysts were evaluated in a laboratory test apparatus at 200,000 hr⁻¹ GHSV with a gas mixture of 50ppm CO, 15%O₂, 8%H₂O, 3%CO₂ and N₂ balance.

**Table 10**

| **% NOx Conversion /Temperature** | **Temperature (°C)** | | | |
|---|---|---|---|---|
| | **150** | **174** | **203** | **224** |
| **Pt/Alumina** | 69% | 77% | 81% | 82% |
| **Pt/Silica-Alumina** | 81% | 83% | 85% | 86% |

These results show that the silica-alumina support provides superior low temperature performance which would be beneficial during start-up of a gas turbine power plant when the exhaust gas composition is transient and the exhaust gas temperature is relatively low.

## Claims

1. A method of selectively catalysing the reduction of oxides of nitrogen (NOₓ) including nitrogen monoxide in an exhaust gas of a stationary source of NOₓ emissions, which exhaust gas also containing oxides of sulfur (SOₓ), wherein the stationary source of NOₓ emissions is a cogeneration plant comprising a heat recovery steam generator, which method comprising the steps of passively oxidising nitrogen monoxide to nitrogen dioxide over an oxidation catalyst comprising a platinum group metal so that a NO₂/NOₓ content is from 40-60%; introducing a nitrogenous reductant into the exhaust gas; and contacting exhaust gas having the 40-60% NO₂/NOₓ content and containing the nitrogenous reductant with a selective catalytic reduction (SCR) catalyst comprising an aluminosilicate zeolite promoted with copper, wherein the platinum group metal in the oxidation catalyst is platinum supported on a particulate support and is disposed on a substrate at 0.0353-1.41 g/L (1-40 g/ft3) and wherein the support for the platinum group metal is silica-doped alumina, titania or optionally doped zirconia.

2. A method according to claim 1, wherein the SOₓ content of the exhaust gas is from 0.5 ppm to 20 ppm.

3. A method according to claim 1, wherein the temperature at which the exhaust gas contacts the SCR catalyst is 200° C. to 450° C and wherein the temperature at which the exhaust gas contacts the oxidatior is about 150° C. to 450° C.

4. A method according to any preceding claim, wherein the aluminosilicate zeolite has a Framework Type Code that is CHA, AEI or AFX.

5. A method according to any of claims 1 to 4, wherein the aluminosilicate zeolite has a Framework Type Code BEA, MOR, MFI or FER.

6. A method according to claim 1, wherein the nitrogenous reductant is ammonia (NH₃) and wherein the alpha ratio of ammonia molecules to NOₓ molecules is 0.90 to 1.10.

7. A stationary source of NOₓ emissions, which is a cogeneration plant comprising a heat recovery steam generator (HRSG), comprising an exhaust system, which exhaust gas also containing oxides of sulfur (SOₓ), optionally for use in a method according to any preceding claim, which system comprising an oxidation catalyst comprising a platinum group metal for passively oxidising nitrogen monoxide to nitrogen dioxide so that a NO₂/NOₓ content is from 40-60%; an injector for introducing a nitrogenous reductant into the exhaust gas located downstream from the oxidation catalyst; and a selective catalytic reduction (SCR) catalyst comprising an aluminosilicate zeolite promoted with copper located downstream of the injector, wherein the platinum group metal in the oxidation catalyst is platinum supported on a particulate support and is disposed on a substrate at 0.0353-1.41 g/L (1-40 g/ft3) and wherein the support for the platinum group metal is silica-doped alumina, titania or optionally doped zirconia.

8. The stationary source of NOₓ emissions of claim 7, wherein the aluminosilicate zeolite has a Framework Type Code that is CHA, AEI or AFX.

9. The stationary source of NOₓ emissions of claim 7, wherein the aluminosilicate zeolite has a Framework Type Code BEA, MOR, MFI or FER.

10. The stationary source of NOₓ emissions of claim 7, wherein the nitrogenous reductant is ammonia (NH₃) and wherein the alpha ratio of ammonia molecules to NOₓ molecules is 0.90 to 1.10.

## Patentansprüche

1. Verfahren zum selektiven Katalysieren der Reduktion von Stickstoffoxiden (NOₓ), einschließlich Stickstoffmonoxid, in einem Abgas einer stationären Quelle von NOₓ-Emissionen, wobei das Abgas auch Schwefeloxide (SOₓ) enthält, wobei die stationäre Quelle von NOₓ-Emissionen ein Heizkraftwerk ist, das einen Wärmegewinnungsdampfgenerator umfasst, wobei das Verfahren die Schritte des passiven Oxidierens von Stickstoffmonoxid zu Stickstoffdioxid über einen Oxidationskatalysator, der ein Platingruppenmetall umfasst, so dass ein NO₂/NOₓ-Gehalt 40 bis 60 % beträgt; des Einbringens eines stickstoffhaltigen Reduktionsmittels in das Abgas; und des Inkontaktbringens des Abgases, das den NO₂/NOₓ-Gehalt von 40 bis 60 % aufweist und das stickstoffhaltige Reduktionsmittel enthält, mit einem Katalysator der selektiven katalytischen Reduktion (SCR) umfasst, der einen Aluminosilikatzeolith umfasst, der mit Kupfer gefördert ist, wobei das Platingruppenmetall in dem Oxidationskatalysator auf einem Partikelträger geträgertes Platin ist und auf einem Substrat zu 0,0353 bis 1,41 g/l (1 bis 40 g/ft3) angeordnet ist, und wobei der Träger für das Platingruppenmetall siliciumdioxiddotiertes Aluminiumoxid, Titandioxid oder optional dotiertes Zirkonoxid ist.

2. Verfahren nach Anspruch 1, wobei der SOₓ-Gehalt des Abgases 0,5 ppm bis 20 ppm beträgt.

3. Verfahren nach Anspruch 1, wobei die Temperatur, bei der das Abgas mit dem SCR-Katalysator in Kontakt gelangt, 200 °C bis 450 °C beträgt, und wobei die Temperatur, bei der das Abgas mit dem Oxidationskatalysator in Kontakt gelangt, 150 °C bis 450 °C beträgt.

4. Verfahren nach einem vorstehenden Anspruch, wobei der Aluminosilikatzeolith einen Framework-Type-Code aufweist, bei dem es sich um CHA, AEI oder AFX handelt.

5. Verfahren nach einem der Ansprüche 1 bis 4, wobei der Aluminosilikatzeolith einen Framework-Type-Code aufweist, bei dem es sich um BEA, MOR, MFI oder FER handelt.

6. Verfahren nach Anspruch 1, wobei das stickstoffhaltige Reduktionsmittel Ammoniak (NH₃) ist und wobei das alpha-Verhältnis von Ammoniakmolekülen zu NOₓ-Molekülen 0,90 bis 1,10 beträgt.

7. Stationäre Quelle von NOₓ-Emissionen, die ein Heizkraftwerk ist, das einen Wärmegewinnungsdampfgenerator (HRSG) umfasst, umfassend ein Abgassystem, wobei das Abgassystem auch Schwefeloxide (SOₓ) enthält, optional zur Verwendung in einem Verfahren nach einem vorstehenden Anspruch, wobei das System einen Oxidationskatalysator umfasst, der ein Platingruppenmetall umfasst, um Stickstoffmonoxide passiv zu Stickstoffdioxid zu oxidieren, so dass ein NO₂/NOₓ-Gehalt 40 bis 60 % beträgt; einen Injektor zum Einbringen eines stickstoffhaltigen Reduktionsmittels in das Abgas, der dem Oxidationskatalysator nachgeschaltet angeordnet ist; und einen Katalysator der selektiven katalytischen Reduktion (SCR), der einen Aluminosilikatzeolith umfasst, der mit Kupfer gefördert und dem Injektor nachgeschaltet angeordnet ist, wobei das Platingruppenmetall in dem Oxidationskatalysator Platin ist, das auf einem Partikelträger geträgertes Platin istund auf einem Substrat zu 0,0353 bis 1,41 g/l (1 bis 40 g/ft3) angeordnet ist, und wobei der Träger für das Platingruppenmetall siliciumdioxiddotiertes Aluminiumoxid, Titandioxid oder optional dotiertes Zirkonoxid ist.

8. Stationäre Quelle von NOₓ-Emissionen nach Anspruch 7, wobei der Aluminosilikatzeolith einen Framework-Type-Code aufweist, bei dem es sich um CHA, AEI oder AFX handelt.

9. Stationäre Quelle von NOₓ-Emissionen nach Anspruch 7, wobei der Aluminosilikatzeolith einen Framework-Type-Code aufweist, bei dem es sich um BEA, MOR, MFI oder FER handelt.

10. Stationäre Quelle von NOₓ-Emissionen nach Anspruch 7, wobei das stickstoffhaltige Reduktionsmittel Ammoniak (NH₃) ist und wobei das alpha-Verhältnis von Ammoniakmolekülen zu NOₓ-Molekülen 0,90 bis 1,10 beträgt.

## Revendications

1. Procédé de catalyse sélective de la réduction d'oxydes d'azote (NOₓ), y compris du monoxyde d'azote, dans un gaz d'échappement d'une source stationnaire d'émissions de NOₓ, ledit gaz d'échappement contenant également des oxydes de soufre (SOₓ) ; dans lequel la source stationnaire d'émissions de NOₓ représente une centrale de cogénération qui comprend un générateur de vapeur du type à récupération de chaleur, le procédé en question comprenant les étapes dans lesquelles : on soumet du monoxyde d'azote à une oxydation par voie passive afin d'obtenir du dioxyde d'azote par-dessus un catalyseur d'oxydation qui comprend un métal du groupe du platine d'une manière telle qu'une teneur en NO₂/NOₓ s'élève de 40 à 60 % ; on introduit un agent de réduction azoté dans le gaz échappement ; et on met le gaz d'échappement, dont la teneur en NO₂/NOₓ s'élève de 40 à 60 % et qui contient l'agent de réduction azoté, en contact avec un catalyseur du type à réduction catalytique sélective (SCR) qui comprend une zéolithe d'aluminosilicate activée avec du cuivre ; dans lequel le métal du groupe du platine dans le catalyseur d'oxydation représente du platine déposé sur un support particulaire et est disposé sur un substrat à raison de 0,0353-1,41 g/l (1-40 g/ft³) ; et dans lequel le support destiné au métal du groupe du platine représente de l'alumine dopée avec de la silice, du dioxyde de titane ou du dioxyde de zirconium dopé de manière facultative.

2. Procédé selon la revendication 1, dans lequel la teneur du gaz d'échappement en SOₓ s'élève de 0,5 ppm à 20 ppm.

3. Procédé selon la revendication 1, dans lequel la température à laquelle le gaz d'échappement entre en contact avec le catalyseur de type SCR s'élève de 200 °C à 450 °C ; et dans lequel la température à laquelle le gaz d'échappement entre en contact avec le catalyseur d'oxydation s'élève de 150 °C à 450 °C.

4. Procédé selon l'une quelconque des revendications précédentes, dans lequel la zéolithe d'aluminosilicate possède un Code de Type de Structure, à savoir CHA, AEI ou AFX.

5. Procédé selon l'une quelconque des revendications 1 à 4, dans lequel la zéolithe d'aluminosilicate possède un Code de Type de Structure BEA, MOR, MFI ou FER.

6. Procédé selon la revendication 1, dans lequel l'agent de réduction azoté représente de l'ammoniac (NH₃) et dans laquelle le rapport alpha des molécules d'ammoniac aux molécules de NOₓ s'élève de 0,90 à 1,10.

7. Source stationnaire d'émissions de NOₓ, à savoir une centrale de cogénération qui comprend un générateur de vapeur du type à récupération de chaleur (HRSG), comprenant un système d'échappement, ledit gaz d'échappement contenant également des oxydes de soufre (SOₓ), de manière facultative pour son utilisation dans un procédé selon l'une quelconque des revendications précédentes ; ledit système comprenant un catalyseur d'oxydation qui comprend un métal du groupe du platine destiné à l'oxydation du monoxyde d'azote en dioxyde d'azote par voie passive, d'une manière telle qu'une teneur en NO₂/NOₓ s'élève de 40 à 60 % ; un injecteur destiné à introduire un agent de réduction azoté dans le gaz d'échappement, disposé en aval par rapport au catalyseur d'oxydation ; et un catalyseur du type à réduction catalytique sélective (SCR) qui comprend une zéolithe d'aluminosilicate activée avec du cuivre, disposé en aval par rapport à l'injecteur ; dans laquelle le métal du groupe du platine dans le catalyseur d'oxydation représente du platine déposé sur un support particulaire et est disposé sur un substrat à raison de 0,0353-1,41 g/l (1-40 g/ft³) ; et dans laquelle le support destiné au métal du groupe du platine représente de l'alumine dopée avec de la silice, du dioxyde de titane ou du dioxyde de zirconium dopé de manière facultative.

8. Source stationnaire d'émissions de NOₓ selon la revendication 7, dans laquelle la zéolithe d'aluminosilicate possède un Code de Type de Structure, à savoir CHA, AEI ou AFX.

9. Source stationnaire d'émissions de NOₓ selon la revendication 7, dans laquelle la zéolithe d'aluminosilicate possède un Code de Type de Structure BEA, MOR, MFI ou FER.

10. Source stationnaire d'émissions de NOₓ selon la revendication 7, dans laquelle l'agent de réduction azoté représente de l'ammoniac (NH₃) et dans laquelle le rapport alpha des molécules d'ammoniac aux molécules de NOₓ s'élève de 0,90 à 1,10.
